# EUROPÄISCHE PATENTSCHRIFT

(11) **EP 1 608 497 B1**
(45) Veröffentlichungstag und Bekanntmachung des Hinweises auf die Patenterteilung: **21.07.2010**
(21) Anmeldenummer: 04715284.8
(22) Anmeldetag: 27.02.2004
(51) Int. Cl.: B29C 47/08, B29C 47/42, B29C 47/36

(54) **GETRIEBE ZUM ANTRIEB EINES MEHRWELLENEXTRUDERS**
TRANSMISSION FOR DRIVING A MULTISHAFT EXTRUDER
TRANSMISSION POUR L'ENTRAINEMENT D'UNE EXTRUDEUSE MULTIVIS

(30) Priorität: 03.04.2003 DE 10315200
(43) Veröffentlichungstag der Anmeldung: 28.12.2005
(73) Patentinhaber: Blach, Josef A., 74348 Lauffen (DE)
(72) Erfinder: Blach, Josef A., 74348 Lauffen (DE)
(74) Vertreter: Berngruber, Otto
(86) Internationale Anmeldenummer: PCT/EP2004/001965
(87) Internationale Veröffentlichungsnummer: WO 2004/087398

(56) Entgegenhaltungen:
- DE-A- 19 815 695
- US-A- 2 754 542
- US-A- 5 510 073

## Beschreibung

Die Erfindung bezieht sich auf ein Getriebe zum Antrieb eines Extruders nach dem Oberbegriff des Anspruchs 1.

Gegenüber einem Doppelwellenextruder haben diese Mehrwellenextruder mit kranzförmig angeordneten Schnecken-wellen den Vorteil, dass sie doppelt so viele Zwickel aufweisen, in denen das Produkt bei der Übergabe von den Förderelementen einer Welle zur nächsten besonders wirksam bearbeitet wird.

Die Leistungsfähigkeit des Mehrwellenextruders hängt im entscheidenden Maße von dem vom Getriebe zur Verfügung gestellten Drehmoment ab. Die Leistungsgrenze des Getriebes wird wesentlich durch die engen Abstände der Wellen beeinflusst. Die Leistungsfähigkeit eines Getriebes wird durch eine Kennzahl ausgedrückt, die sich aus dem Verhältnis des Drehmoments zum Abstand der Welle in cm³ ergibt.

Aus EP 0788867 B1 ist bereits ein Getriebe für einen Mehrwellenextruder nach dem Oberbegriff des Anspruchs 1 bekannt. Die Grenze der Leistungsfähigkeit des Getriebes des bekannten Mehrwellenextruders liegt derzeit bei 6 Nm/cm³ je Welle.

Aufgabe der Erfindung ist es, die Leistungsfähigkeit eines Getriebes für einen Mehrwellenextruder wesentlich zu steigern.

Dies wird erfindungsgemäß mit dem im Anspruch 1 gekennzeichneten Getriebe erreicht. In den Unteransprüchen sind vorteilhafte Ausgestaltungen der Erfindung wiedergegeben.

Erfindungsgemäß wird jedes erste und jedes zweite Ritzel achsversetzt sowohl von einem zentralen außenverzahnten Antriebsrad anteilig innerhalb, als auch von dem umfassenden innenverzahnten Hohlrad außerhalb, mit jeweils dem gleichen Drehmoment angetrieben.

Aufgrund ihres geringen Abstandes müssen die Abtriebswellen des Getriebes für den Mehrwellenextruder mit entsprechend geringem Durchmesser ausgebildet werden. Sie werden daher auf das äußerste belastet. Ein hohes Drehmoment ist damit nur erreichbar, wenn keine Quer- oder dergleichen Kräfte auf die Abtriebswellen einwirken. Dies wird erfindungsgemäß mit dem innenverzahnten Hohlrad sichergestellt, das mit dem gleichen Drehmoment angetrieben wird wie das außen ver-zahnte Antriebsrad. Die radialen Kräfte, die auf das Ritzel einwirken, heben sich damit auf.

Ein Antrieb des zentralen außenverzahnten Antriebsrades und des umfassenden innenverzahnten Hohlrades mit der gleichen Leistung lässt sich auf unterschiedliche Weise verwirk-lichen. So können beispielsweise zwei getrennte Motoren mit entsprechender elektronischer Steuerung das außenverzahnte zentrale Antriebsrad und das innenverzahnte Hohlrad mit dem gleichen Drehmoment antreiben. Ferner ist es möglich, zwischen der Hauptantriebswelle des Getriebes und dem außenverzahnten zentralen Antriebsrad einerseits und dem umfassenden innenverzahnten Hohlrad andererseits ein Differentialgetriebe vorzusehen, das das Drehmoment der Hauptantriebswelle jeweils zur Hälfte auf die außenverzahnten zentralen Antriebsräder und die innenverzahnten Hohlräder verteilt.

Nachstehend ist eine Ausführungsform des erfindungsgemäßen Getriebes anhand der Zeichnung näher erläutert. Darin zeigen:
Figur 1 einen Längsschnitt durch das Verfahrensteil eines Mehrwellenextruder;
Figur 2 einen Querschnitt entlang der Linie II-II in Figur 1;
Figur 3 einen Längsschnitt durch das Getriebe zum Antrieb des Mehrwellenextruders;
Figur 4 und 5 einen Querschnitt entlang der Linie IV-IV bzw. V-V in Figur 3; und
Figur 6 eine vergrößerte Detailansicht der Kuppel- und Verzweigungsbüchse nach Figur 3.

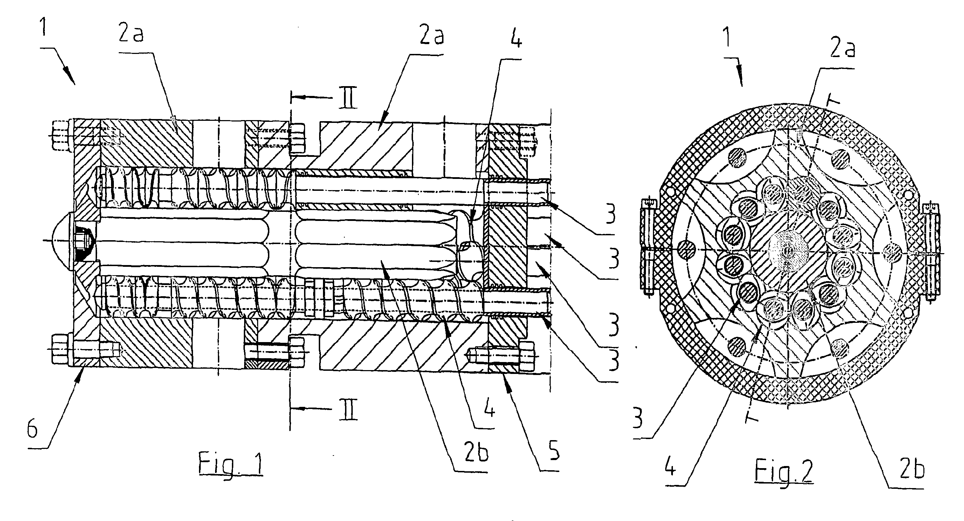

Gemäß Figur 1 und 2 weist das Verfahrensteil 1 des Extruders in einem Gehäuse 2a mit einem Kern 2b längs eines Kreises (Figur 2) mit gleichem Zentriwinkelabstand angeordnete, gleichsinnig umlaufende achsparallele Wellen 3 auf, die mit Förderelementen 4 bestückt sind, wobei die Förderelemente 4 benachbarter Wellen ineinander greifen.

Der Verfahrensteil 1 ist an beiden Stirnseiten mit Endplatten 5 und 6 verschlossen. Durch die förderaufseitige Endplatte 5 erstrecken sich die Wellen 3, die von dem Verzweigungsgetriebe 7 gleichsinnig drehend angetrieben werden.

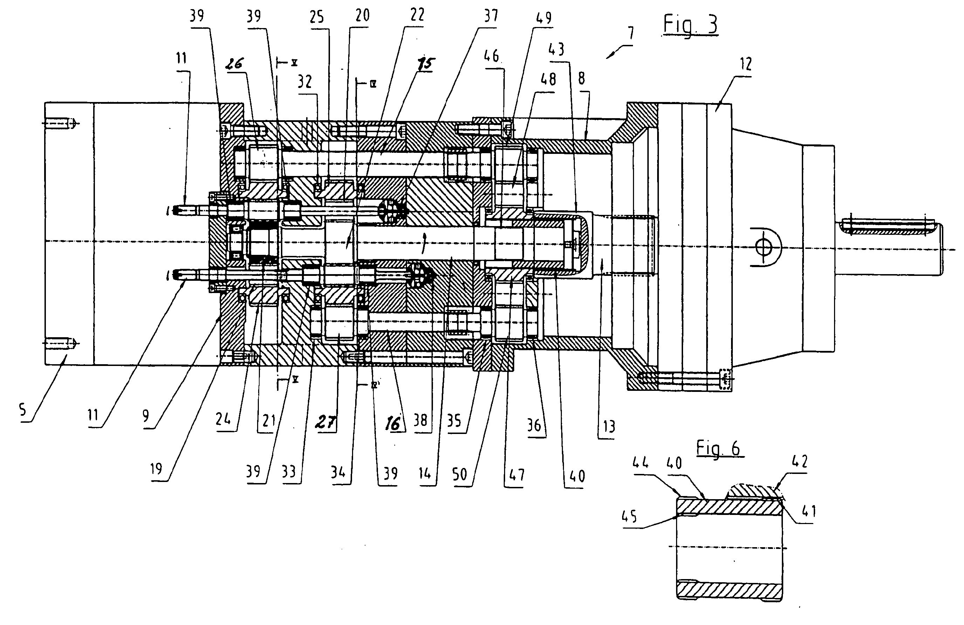

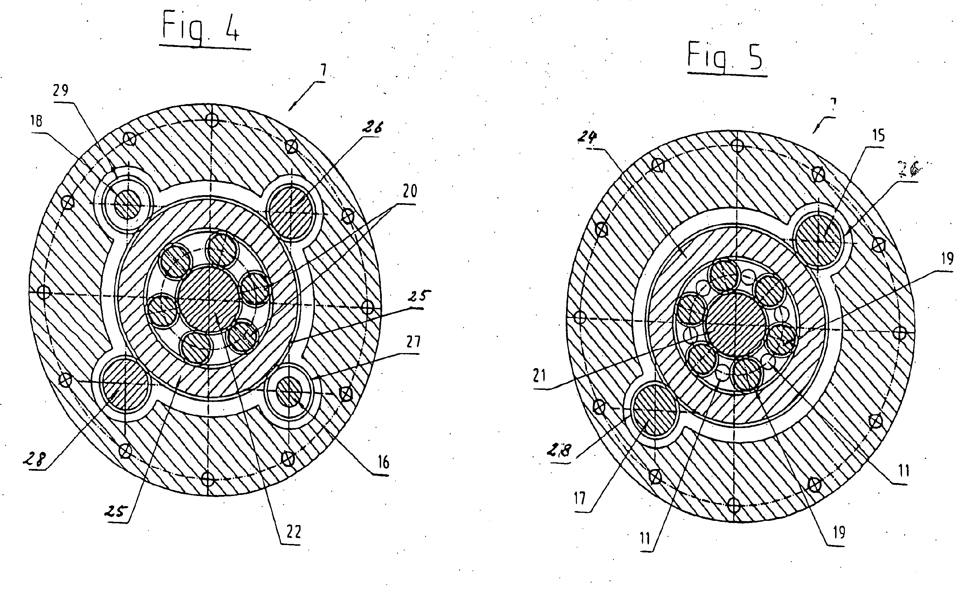

Das Verzweigungsgetriebe ist gemäß Figur 3 bis 6 über eine Platte 9 mit der Endplatte 5 des Verfahrensteils 1 verbunden.

Aus dem Verzweigungsgetriebe 7 erstrecken sich an der dem Verfahrensteil 1 zugewandten Seite zwölf Abtriebswellen 11, die koaxial mit den zwölf Wellen 3 des Verfahrensteils 1 drehfest verbunden sind. An der vom Verfahrensteil 1 abgewandten Seite ist das Verzweigungsgetriebe 7 über das Verbindungsgehäuse 8 an dem Reduziergetriebe 12 angeflanscht, von dem sich eine Hauptantriebswelle 13 in das Verbindungsgehäuse 8 erstreckt. Das Reduziergetriebe 12 wird von einem nicht dargestellten Motor angetrieben.

Die Hauptantriebswelle 13 treibt über die Kuppel- und Verzweigungsbüchse 40 eine dazu koaxiale innen liegende Antriebswelle 14 sowie vier außenliegende achsparallele Antriebswellen 15 bis 18 an.

Die Abtriebswellen 11 sind mit den Ritzeln 19, 20 aus einem Stück gefertigt. Wegen des geringen Achsabstandes der Abtriebswellen 11 voneinander sind die Ritzel 19, 20 benachbarter Wellen 11 axial versetzt angeordnet. Das heißt, die Ritzel 19 sind näher am Verfahrensteil 1 angeordnet als die Ritzel 20.

Dementsprechend ist die zentrale Antriebswelle 14 drehfest mit zwei axial versetzten innenliegenden außenverzahnten Antriebsrädern 21, 22 versehen, die mit den Ritzeln 19, 20 kämmen.

Die Ritzel 19, 20 werden sowohl von den zentralen außenverzahnten Antriebsrädern 21, 22 als auch von dem radial gegenüber liegend angeordneten umfassenden innenverzahntem Hohlrad 24, 25 angetrieben, wobei die Hohlräder 24 und 25 ihrerseits entsprechend axial versetzt angeordnet sind.

Jedes Hohlrad 24, 25 ist mit einer Außenverzahnung versehen, mit der ein außenverzahntes Antriebsrad 26 bis 29 auf den vier außenliegenden Antriebswellen 15 bis 18 kämmt. Die außenliegenden Antriebsräder 26 bis 29 sind entsprechend den Ritzeln 19, 20 bzw. den innenliegenden Antriebsrädern 21, 22 bzw. den Hohlrädern 24, 25 axial versetzt angeordnet.

Wie aus Figur 3, 4 und 5 ersichtlich, sind damit die beiden außenliegenden Antriebswellen 15, 17, die die näher an dem Verfahrensteil 1 angeordneten Ritzel 19 über das Hohlrad 24 antreiben, länger ausgebildet als die beiden außenliegenden Antriebswellen 16, 18 zum Antrieb der Ritzel 20. Da auf die langen und die kurzen außenliegenden Antriebswellen 15, 17 bzw. 16, 18 das gleiche Drehmoment einwirkt, würden die langen Antriebswellen 15, 17 jedoch stärker verdrillt wie die kurzen Antriebswellen 16, 18. Zum Drehwinkelausgleich weisen die langen Antriebswellen 15, 17 einen entsprechend größeren Durchmesser auf, um das Drehmoment für die Hohlräder 24 und 25 exakt zu teilen.

Die Hohlräder 24, 25 sind durch die beiden außenliegenden diametral gegenüber liegenden Antriebsräder 26, 28 bzw. 27, 29 weitgehend kräfteneutral zentriert. Demgemäss können die Radiallager 31, 32 für die Hohlräder 24, 25 relativ klein ausgeführt sein. Die außenliegenden Antriebswellen 15 bis 18 sind mit Radiallagern 33, 34 und 35, 36 in dem Gehäuse gelagert. Die Lagerung der Abtriebswellen 11 erfolgt durch Axiallager 37, 38 und die Radiallager 39.

Zum Antrieb der innenliegenden Antriebswelle 14 und der außenliegenden Antriebswellen 15 bis 18 ist für die Leistungsverzweigung eine koaxial angeordnete, schwimmend gelagerte Büchse 40 vorgesehen, die gemäß Figur 6 mit einer geraden Außenverzahnung 41 versehen ist, die mit einer Innenverzahnung 42 an der Innenseite einer an der Hauptantriebswelle 13 drehfest befestigten Hülse 43 im Eingriff ist.

Ferner weist die schwimmend gelagerte Büchse 40 an der Innen- und Außenseite entgegengesetzt verlaufende Schrägverzahnungen 45 bis 44 auf, die einerseits mit einer Schrägverzahnung 46 auf der innenliegenden Antriebswelle 14 kämmen und andererseits mit einer Schrägverzahnung an der Innenseite eines Hohlrades 47, das mit einer Außenverzahnung versehen ist und über ein zwischengeschaltetes Wenderad 48 mit einem Zahnrad 49, 50 an den außenliegenden Antriebswellen 15 bis 18 in Eingriff steht.

Statt des geschilderten Getriebes mit Buchse 40, Hohlrad 47, Wenderad 48 usw., welches das Drehmoment der Hauptantriebswelle 13 auf die innenliegende Antriebswelle 14 und die außenliegenden Antriebswellen 15 bis 18 aufteilt, kann jedes andere Getriebe verwendet werden, das zu einer optimal halben Aufteilung der Leistung einerseits auf die innenliegende Antriebswelle 14 und andererseits auf die außenliegenden Antriebswellen 15 bis 18 führt.

Statt der zwei diametral gegenüber liegenden äußeren Antriebsräder 26, 28 bzw. 27, 29, die mit dem Hohlrad 24 bzw. 25 in Eingriff stehen, können auch drei oder mehr mit gleicher Winkelteilung angeordnete außenliegende Antriebsräder an jedem Hohlrad 24, 25 angreifen, wodurch die Hohlräder 24, 25 zentriert werden und damit auf die Lagerung 31, 32 der Hohlräder 24, 25 verzichtet werden kann.

## Patentansprüche

1. Getriebe zum Antrieb eines Extruders, der mehrere längs eines Kreises mit gleichem Zentriwinkelabstand angeordnete gleichsinnig drehende achsparallele Wellen, welche mit Förderelementen drehfest verbunden sind, mit denen benachbarte Wellen ineinander greifen, aufweist, wobei die Abtriebswellen des Getriebes mit den Wellen koaxial drehfest verbunden sind, jede Abtriebswelle ein Ritzel aufweist, die Abtriebsritzel mit einem auf einer zentralen Antriebswelle vorgesehenen, außen verzahnten Antriebsrad und mit einem umfassenden innenverzahnten Hohlrad kämmen, auf benachbarten Abtriebswellen (11) axial versetzte Ritzel (19, 20) angeordnet sind und die Antriebsräder der zentralen Antriebswelle sowie die Hohlräder in gleicher Weise versetzt angeordnet sind, **dadurch gekennzeichnet, dass** die Hohlräder (24, 25) mit einer Auβenverzahnung (51) versehen sind, mit der ein Antriebsrad (26 bis 29) auf einer außenliegenden Antriebswelle (15 bis 18) kämmt, sodass jedes Hohlrad (24, 25) mit dem gleichen Drehmoment angetrieben wird und das Drehmoment jedes Abtriebsritzels (19, 20) über das zentrale Antriebsrad (21, 22) und über das Hohlrad (24, 25) je zur Hälfte eingeleitet wird.

2. Getriebe nach Anspruch 1, **dadurch gekennzeichnet, dass** die außenliegenden Antriebswellen (15 bis 18) durch die axial gegeneinander versetzten Abtriebsritzel (19, 20) benachbarter Abtriebswellen (11) eine unterschiedliche Länge aufweisen und die kurzen auβenliegenden Antriebswellen (16, 18) einen geringeren Durchmesser als die langen außenliegenden Antriebswellen (15, 17) aufweisen.

3. Getriebe nach Anspruch 1 oder 2, **dadurch gekennzeichnet, dass** wenigstens zwei mit gleichem Zentriwinkelabstand angeordnete außenliegende Antriebsräder (26 bis 29) mit der Außenverzahnung des Hohlrades (24, 25) kämmen.

4. Getriebe nach Anspruch 1, **dadurch gekennzeichnet, dass** zum Antrieb der zentralen Antriebswelle (14) und der außenliegenden Antriebswelle (15 bis 18) eine koaxiale, schwimmend gelagerte Büchse (40) mit einer Innenverzahnung (45) und einer Außenverzahnung (44) versehen ist, wobei die Innenverzahnung (45) mit einer Außenverzahnung auf der innenliegenden Antriebswelle (14) und die Außenverzahnung (44) mit einer Innenverzahnung eines Hohlrades (47) kämmt, dessen Auβenverzahnung über ein axial versetztes Wenderad (48) mit einem Zahnrad (49, 50) an der außenliegenden Antriebswelle (15 bis 18) in Eingriff steht.

5. Getriebe nach Anspruch 4, **dadurch gekennzeichnet, dass** die Außenverzahnung (44) und die Innenverzahnung (45) durch entgegengesetzt verlaufende Schrägverzahnungen gebildet werden.

6. Getriebe nach Anspruch 4 oder 5, **dadurch gekennzeichnet, dass** die Büchse (40) über eine Geradverzahnung (41) angetrieben wird.

7. Getriebe nach Anspruch 1, **dadurch gekennzeichnet, dass** es zum Antrieb eines Extruders (1) mit wenigstens acht gleichsinnig drehenden achsparallelen Wellen (3) ausgebildet ist.

## Claims

1. Transmission for driving an extruder, having a plurality of axis-parallel, rotatable shafts arranged at the same central angle distance along a circle, said shafts being connected in a rotationally fixed manner to conveying members, with which adjacent shafts interlock, whereas the output shafts of the transmission are connected coaxially in a rotationally fixed manner to the shafts, whereas each output shaft has a pinion, with said output pinions meshing with an externally toothed driving gear and an encompassing internally toothed ring gear on an central driving shaft, whereas pinions (19, 20) are axially displaced on adjacent output shafts (11) and the driving gears of the central driving shaft as well as the ring gears are similarly axially displaced, **characterized in that** the ring gears (24, 25) are furnished with external gear teeth (51), with which a drive wheel (26 - 29) meshes on an external driving shaft (15 -18) so that each ring gear (24, 25) is driven with the same torque and said torque of each output pinion (19, 20) is initiated half by the central driving gear (21, 22) and half by the ring gear (24, 25).

2. Transmission according to claim 1, **characterized in that** the externally driving shafts (15 - 18) are different in length due to the axially displaced output pinions (19, 20) of the adjacent output shafts (11) and the short external driving shafts (16, 18) are smaller in diameter than the long external driving shafts (15, 17).

3. Transmission according to claim 1 or 2, **characterized in that** at least two external driving gears (26 - 29) arranged at the same central angle distance mesh with the external gear teeth of the ring gear (24, 25).

4. Transmission according to claim 1, **characterized in that** for driving according to the central driving shaft (14) and the external driving shafts (15 -18) a coaxial floating sleeve (40) is provided with internal teeth (45) and external teeth (44), whereas said internal teeth (45) mesh with external teeth on the internal driving shaft (14) and whereas said external teeth (44) mesh with internal teeth of a ring gear (47), with said external teeth being engaged with a pinion (49, 50) at the external driving shaft (15 - 18) via an axially displaced reversing wheel (48).

5. Transmission according to claim 4, **characterized in that** the external teeth (44) and the internal teeth (45) are formed by helical gears extending in the opposite direction.

6. Transmission according to claim 4 or 5, **characterized in that** the sleeve (40) is driven by a spur gearing (41).

7. Transmission according to claim 1, **characterized in that** it is designed for driving an extruder (1) with at least eight co-rotating axially parallel shafts (3).

## Revendications

1. Engrenage pour l'entraînement d'une extrudeuse qui présente plusieurs arbres parallèles à l'axe tournant dans le même sens, agencés le long d'un cercle avec le même écartement par rapport à l'angle au centre, qui sont reliés de manière solidaire en rotation avec des éléments transporteurs avec lesquels s'engrènent des arbres voisins, les arbres menés de l'engrenage étant reliés aux arbres coaxialement et de façon solidaire en rotation, chaque arbre mené présentant un pignon, les pignons menés s'engrenant avec une roue motrice dentée sur l'extérieur et prévue sur un arbre moteur central et avec une couronne enveloppante à denture intérieure, des pignons (19, 20) décalés axialement étant agencés sur des arbres menés (11) voisins, et les roues motrices de l'arbre moteur central ainsi que les roues à denture intérieure étant agencés en décalage de la même manière, **caractérisé en ce que** les roues à denture intérieure (24, 25) sont pourvues d'une denture extérieure (51) avec laquelle une roue motrice (26 à 29) s'engrène avec un arbre moteur (15 à 18) situé à l'extérieur, de telle sorte que chaque roue à denture intérieure (24, 25) est entraînée avec le même couple de rotation et que le couple de rotation de chaque pignon mené (19, 20) est respectivement introduit jusqu'à la moitié via la roue motrice centrale (21, 22) et via la roue à denture intérieure (24, 25).

2. Engrenage selon la revendication 1, **caractérisée en ce que** par les pignons menés (19, 20) décalés axialement l'un par rapport à l'autre, d'arbres menés (11) voisins, les arbres moteurs (15 à 18) situés à l'intérieur présentent une longueur différente, et les arbres moteurs (16, 18) courts situés à l'extérieur présentent un diamètre plus faible que les arbres moteurs (15, 17) longs situés à l'extérieur.

3. Engrenage selon les revendications 1 ou 2, **caractérisé en ce qu'**au moins deux roues motrices (26 à 29) situées à l'extérieur, agencées avec le même écartement par rapport à l'angle au centre, s'engrènent avec la denture extérieure de la couronne à denture intérieure (24, 25).

4. Engrenage selon la revendication 1, **caractérisé en ce que** pour entraîner l'arbre moteur (14) central et l'arbre moteur extérieur (15 à 18), une bague (40) coaxiale montée flottante est pourvue d'une denture intérieure (45) et d'une denture extérieure (44), la denture intérieure (45) s'engrenant avec une denture extérieure sur l'arbre moteur (14) situé à l'intérieur, et la denture extérieure (44) s'engrenant avec la denture intérieure d'une couronne à denture intérieure (47) dont la denture extérieure est en engagement avec une roue dentée (49, 50) sur l'arbre moteur (15 à 18) situé à l'extérieur, via une roue d'inversion (48) décalée axialement.

5. Engrenage selon la revendication 4, **caractérisé en ce que** la denture extérieure (44) et la denture intérieure (45) sont formées par des dentures hélicoïdales s'étendant en sens opposé.

6. Engrenage selon les revendications 4 ou 5, **caractérisé en ce que** la bague (40) est entraînée via une denture droite (41).

7. Engrenage selon la revendication 1, **caractérisé en ce qu'**il est réalisé avec au moins huit arbres (3) à axes parallèles tournant dans le même sens pour entraîner une extrudeuse (1):
